(19) Europäisches Patentamt / European Patent Office / Office européen des brevets

(11) **EP 4 531 331 A1**

(12) **EUROPEAN PATENT APPLICATION**

(43) Date of publication:
02.04.2025 Bulletin 2025/14

(21) Application number: 24203716.6

(22) Date of filing: 30.09.2024

(51) International Patent Classification (IPC):
*H04L 9/30* (2006.01)

(52) Cooperative Patent Classification (CPC):
H04L 9/3093

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 29.09.2023 US 202318374732
29.09.2023 EP 23383000

(71) Applicant: Multiverse Computing S.L.
20014 Donostia / San Sebastián (ES)

(72) Inventors:
• Orus, Roman
20014 Donostia / San Sebastián (ES)
• Singh, Sukhbinder
20014 Donostia / San Sebastián (ES)

(74) Representative: Sonnenberg Harrison
Partnerschaft mbB
Herzogspitalstraße 10a
80331 München (DE)

(54) **TENSOR NETWORK-ENHANCED PRIME FACTORIZATION**

(57) A computer implemented method for solving a classical optimization problem of integer factorization implemented on a digital computer system is described. The method is implemented on a classical processor adapted to execute a time evolving block decimation algorithm. The method comprises in a first step an inputting a lattice basis and a target lattice vector to an input device of the classical processor followed by an implementing a lattice basis reduction algorithm on the lattice basis in an implementation module, thereby obtaining a reduced orthogonal lattice basis. The method further comprises a projecting the target lattice vector on the reduced orthogonal lattice basis followed by a building a closest vector to the target lattice vector and optimizing the closest vector using a tropical time-evolving block decimation algorithm by the classical processor and finally outputting an integer vector.

Fig. 4

**Description**

CROSS-REFERENCE TO RELATED APPLICATIONS

The present application claims priority of the European Patent application No. 23383000.9 and of US patent application No. 18/374,732 both filed on 29 September 2023. The entire content thereof is hereby incorporated herein by reference.

FIELD OF THE INVENTION

The field of the invention relates to a computer-implemented method and a system for classical optimization problem of integer factorization.

BACKGROUND OF THE INVENTION

It is known in the prior art that large integers numbers cannot be factorized rapidly which is a main problem of a public-key cryptography. There is no efficient classical (non-quantum) integer factorization algorithm known in the prior art. However, it has not been proven that the efficient non-quantum integer factorization algorithm does not exist. An algorithm that efficiently factors an arbitrary integer can render an RSA-based public-key or other cryptosystems insecure.

The basic idea behind RSA encryption is to use two large prime numbers to generate a public key and a private key. The public key is used to encrypt data, while the private key is used to decrypt the data. The security of the algorithm depends on the fact that it is difficult to factorize large numbers into their prime factors using conventional computers.

In addition to RSA, factorization is also used in other cryptographic algorithms, such as the elliptic curve cryptography (ECC) and the integer factorization-based cryptosystems.

The RSA-based public-key cryptosystem is used for digital signatures, online financial transactions, security of sensitive protocols and information, VPN connections. Therefore, it is important to keep the RSA-based public-key cryptosystem as secure as possible.

A brute force algorithm factorizes a d-digit integer number N to verify if the *d*-digit integer A can be divided by all prime numbers up to $\sqrt{N}$. The time complexity of the brute force algorithm is often proportional to the input size, for example, $\sqrt{N}$ steps to factorize a d-digit integer N. $\sqrt{N}$ steps is exponential to the number of the digits d.

A quadratic sieve algorithm is known to be a more efficient algorithm than the brute force algorithm for prime factorization. The quadratic sieve algorithm tends to construct integers *a, b* such that $a^2 - b^2$ is a multiple of the integer N. Then, when the integers *a, b* are found, the quadratic sieve algorithm checks whether $a \pm b$ have common factors with the integer *N*. The quadratic sieve method has an asymptotic runtime exponential in $\sqrt{d}$.

In a number theory, a general number field sieve (GNFS) algorithm is the most efficient classical algorithm known for factoring integers larger than $10^{100}$. The general number field sieve algorithm achieves an asymptotic runtime complexity that is exponential in $d^{1/3}$. The exponential runtime scaling limits the applicability of the classical factoring algorithms to numbers with a few hundred digits.

It is known that the large integers numbers can be efficiently factorized using a quantum computer via a Shor's algorithm. The Shor's algorithm has computational cost that scales polynomially $\approx d^3$. However, for implementing the Shor's algorithm, it is required computational resources of the quantum computer which are not available in the near future.

Therefore, one of the challenges in the number theory is to develop post-quantum cryptographic protocols, for example, classical cryptographic protocols that are resistant to cryptographic attacks with the quantum computers.

A lattice-based cryptography is known from Antonio Ignacio Vera "A Note on Integer Factorization Using Lattices", pp.12. inria-00467590, dated 27 March 2010. The lattice-based cryptography is one of the main approaches in cryptographic protocols in a post-quantum computing world. In theory, it is possible, that the RSA, Diffie-Hellman, or elliptic-curve cryptosystems could be attacked using the Shor's algorithm on the quantum algorithm. Unlike the RSA, the Diffie-Hellman and the elliptic-curve cryptosystems, the lattice-based cryptography appears to be resistant against cryptographic attacks by a classical computer and by the quantum computer. Non-limiting examples of lattice-based cryptographic protocols include Knapsack algorithm, Coppersmith algorithm, NTRU algorithm, LWR algorithm, and Schnorr's algorithm.

A known challenging computational problem in lattice-based cryptographic constructions is a Shortest Vector Problem (SVP). In the lattice-based problems, an input of the lattice-based cryptographic construction is a lattice represented by an arbitrary basis, and a solution to the SVP is an output with the shortest non-zero vector in the lattice. The SVP is considered to be NP-hard (non-deterministic polynomial-time hardness) problem even with approximation factors which are polynomial in the lattice. The SVP problem is considered challenging to be solved even using the quantum computer.

Schnorr's algorithm is considered to be one of the most efficient lattice-based factoring algorithms. However, recent research claimed that the Schnorr's algorithm could challenge the RSA. As in known lattice-based factoring algorithms, the main challenge of the Schnorr's algorithm is the SVP and a closest vector problem (CVP). The CVP is a computational problem on the lattices closely related to the SVP. Given a lattice Z and a target point ~x, the CVP aims to find the lattice point closest to the target point x. The SVP and the CVP can be defined with respect to any norm, but the Euclidean norm is the most common.

Another known challenge with the Schnorr's algorithm is that the quality of factors output by the Schnorr's algorithm is strongly dependent on the quality of the CVP solution. The main limitation of the Schnorr's algorithm is inability to solve the CVP to a high enough accuracy. The generic CVP is known to be an NP-hard problem and the CVP underlying Schnorr's algorithm is formulated for a particular type of the lattice, often called a prime number lattice.

It has been proposed a new quantum algorithm to improve the CVP step part of the Schnorr's algorithm by Bao Yan et al., "Factoring integers with sublinear resources on a superconducting quantum processor," arXiv:2212.12372, dated 23 December 2022.

The Bao Yan et al. document proposes to combine the Babai's algorithm with a quantum approximate quantum optimization (QAQO) algorithm. The idea of the Bao Yan et al. document is to use a quantum computer for selecting a better approximation from the $2^n$ possible output vectors. Bao Yan et al. offers an improvement to Schnorr's CVP step. Schnorr's approach used Babai's algorithm to produce a floating-point vector, which is rounded to integers to complete the factorization. However, this rounding is where inaccuracies arise, reducing the algorithm's reliability in finding correct factors.

Bao Yan et al. showed that the rounding step can be refined. Instead of simply rounding each floating-point number to the nearest integer, they suggested exploring different rounding choices, namely up or down, for each component to improve accuracy. They framed this decision as a combinatorial optimization problem, i.e. determining which combination of rounding choices produces a vector closest to the target vector.

A quantum computer is used to solve this optimization problem through the Quantum Approximate Optimization Algorithm (QAOA). However, this quantum approach is practical only for small vectors, as the number of possible rounding choices grows exponentially with the vector's size, making the problem computationally expensive for larger numbers.

The Bao Yan et al., document assigns an unknown binary variable to the floating-point coefficient of the output vector obtained by Babai's algorithm or BKZ algorithm. Assigning an unknown binary variable enables to encode the choice of rounding of the floating-point coefficients up or down to the closest integer number. Therefore, it is proposed to determine an optimal value of the unknown binary variables by solving an optimization problem, for example, by minimizing a distance to the specified target. To solve this optimization problem, the classical resources are required that scale exponentially with the lattice dimension.

For this reason, the Bao Yan et al., document proposes to solve the optimization problem using the QOQA algorithm on the quantum computer. A cost function of the optimization problem can be expressed as a connected classical Ising spin glass Hamiltonians. The cost function can also be encoded as a quantum Hamiltonian. Ground state of the quantum Hamiltonian determined by the QAQO algorithm correspond to the solution of the classical optimization problem. However, this quantum approach is practical only for small vectors, as the number of possible rounding choices grows exponentially with the vector's size, making the problem computationally expensive for larger numbers.

The Bao Yan et al. document implements the optimization problem by factoring integers up to 48 bits, which requires up to 10 qubits on the quantum computer. The method presented by the document by Bao Yan et al. could challenge the RSA and would require 372 qubits and a circuit depth of thousands. However, it is still inconceivable when the proposed quantum algorithm can be implemented practically. Today's quantum computers are too noisy to factor large numbers using the method described by Bao Yan et al.

The paper entitled "Tropical Tensor Network for Ground States of Spin Glasses," by Jin-Guo Liu, Lei Wang, Pan Zhang, in Phys. Rev. Lett. 126, 090506 (2021), explored using tropical tensor networks for combinatorial optimization, but the method is not scalable.

BRIEF SUMMARY OF THE INVENTION

The present document represents an improvement on the state-of the art classical approach to improve the CVP step of the Schnorr's algorithm and thus enable more efficient factorisation of large numbers. The present document describes an enhanced classical Schnorr's algorithm. In the present document, the prior art QAQO algorithm is replaced with a quantum-inspired algorithm named a time-evolving block decimation (TEBD) algorithm. The TEBD algorithm is known, for example, from Guifré Vidal, "Efficient Classical Simulation of Slightly Entangled Quantum Computations". Physical Review Letters. 91 (14): 147902. arXiv:quant-ph/0301063, dated 26 February 2003.

The TEBD algorithm was invented to find ground states of quantum Hamiltonians, for example the quantum Ising model in one dimension. In the present document, the TEBD algorithm is applied directly to solve the classical optimization problem to improve the CVP step of the Schnorr's algorithm.

However, the direct application of the prior art TEBD algorithms for the classical optimization problem is not accurate enough to improve the Schnorr's algorithm for large-sized integers.

Therefore, one of the challenges to factorize the large numbers is to adapt the TEBD algorithm to the classical optimization problems. The present document describes a "Tropical TEBD" algorithm, a novel implementation of the TEBD algorithm that enhances a non-quantum nature of the classical optimization problem and overcomes the generation of excess entanglement known in the prior art TEBD algorithm.

A computer implemented method for solving a classical optimization problem of integer factorization is described. The computer implemented method is implemented on a digital computer system comprising a classical processor adapted to execute a time evolving block decimation algorithm. The method comprises a first step of inputting a lattice basis and a target lattice vector to an input device of the classical processor. In a second step, a lattice basis reduction algorithm is implemented on the lattice basis in an implementation module and a reduced orthogonal lattice basis is thereby obtained. In a third step, the target lattice vector is projected on the reduced orthogonal lattice basis, followed by a step of building a closest vector to the target lattice vector. Finally, the method set out in this document comprises a step of optimizing, by the classical processor, the closest vector using a tropical time-evolving block decimation algorithm and outputting an integer vector.

In one aspect, the integer vector represents the shortest distance between the lattice basis and the target lattice vector.

The method may comprise a step of calculation of smooth-relation pairs from the integer vector.

In another aspect, the lattice basis reduction algorithm is a Lenstra-Lenstra-Lovasz lattice basis reduction algorithm.

The method may comprise a step building a closest vector comprises determining floating-point coefficients of the optimal closest vector.

The method may further comprise a step of rounding down floating-point coefficients of the closest vector to obtain the integer vector.

The method may further comprise a step of applying a rounding function to the reduced orthogonal lattice basis.

A computer system for solving a classical optimization problem of integer factorization implemented on a digital computer system is also described in this document. The computer system comprises a memory for storing data relating to a lattice basis, a target lattice vector and executable computer modules. The system further comprises a processor for executing the executable computer modules. The executable computer modules comprise an implementation module for implementing a lattice basis reduction algorithm on the lattice basis and a TEBD module for optimizing the optimal closest vector B using a tropical time-evolving block decimation algorithm by the classical processor.

The computer system may further comprise a tropicalization module for implementing a tropicalization map and a de-Tropicalization map.

The computer system may further comprise a decomposition module for decomposition of a Hamiltonian into two-variable Hamiltonians.

A use of the computer implemented method for solving a classical optimization problem of integer factorization is described. The shortest distance between the lattice basis and the target lattice vector is representative of one of a lattice-based cryptography, post-quantum cryptographic protocols, number theory.

A computer system for decrypting cyphertext is described in this document. The computer system comprises a decryption module implementing an algorithm for decrypting the cyphertext. The algorithm for decrypting the cyphertext uses a computer implemented method for solving a classical optimization problem of integer factorization.

The present invention therefore addresses the combinatorial optimization problem using classical computers, specifically through tensor network techniques. Tensor networks were developed to efficiently simulate large quantum systems on classical computers. The present invention adapts the established Time-Evolving Block Decimation (TEBD) tensor network algorithm to work with tropical algebra, which is suited for solving combinatorial optimization problems.

In summary, the present invention recognises that the CVP problem in Schnorr's algorithm can be recasted as a combinatorial optimization problem for quantum computers, and proposes replacing the quantum QAOA algorithm with a classical, scalable tropical TEBD algorithm, making it practical for factoring large numbers and solving optimization problems on classical hardware.

The tropical TEBD is applied to solve the combinatorial optimization problem to improve the solution of the SVP step of Schnorr's algorithm. The TEBD algorithm produces a binary vector, where each component is either zero or one. If a component is zero, the corresponding value is rounded down in the approximate CVP solution from Schnorr's algorithm, and if a component is one, the corresponding value is rounded up down in the approximate CVP solution from Schnorr's algorithm. This approach allows producing a potentially more accurate CVP solution than Schnorr's original approach. The CVP solution is then used in the next step of Schnorr's algorithm, where it is checked to see if the relation between the closest vector v and the target vector t can produce a congruence of the form: $a^2 \equiv b^2 \mod N$ where a and b are integers and such congruences often lead to a factorization of N.

The improved closest vector v gives critical information for solving the factorization of N. Specifically, it provides relations that, when processed, for example, using the greatest common divisor (GCD) computation, can reveal the prime factors of N.

In a non-limiting example, optimization problems are the route optimization problem for delivery routes, optimization of energy grids, optimization of predictive maintenance of machines in a factory, portfolio optimization, financial equilibrium, machine learning boosting classifiers for anomaly detection, pattern detection, image, and speech recognition. The Hamiltonians are generated from variables which are representative for such optimization problems.

For example, in order to generate a Hamiltonian for the optimization of a delivery route, it is necessary to encode the problem into a graph. The nodes in the graph represent the delivery locations and the edges would represent the routes between the nodes. This graph that generates a Hamiltonian, describes the energy of the system. Similarly, optimisation of predictive maintenance of machines in a factory involves the construction of a graph in which the nodes of the graph represent the machines in the factors and the edges represent the relationships between the machines.

The Hamiltonian is used to describe the energy of a financial system to enable portfolio optimisation or financial equilibrium. The Hamiltonian is used in mathematical finance to describe the state of a financial system and how the financial system evolves over time. To create a Hamiltonian for a financial system, it is necessary to define the variables that describe the state of the financial system. These variables could include, but are not limited to, stock prices, interest rates, exchange rates, and volatility. The Hamiltonian can then be constructed using filed theory which describes how the variables vary over time (and space).

There are different ways to generate a Hamiltonian for the financial system, but one common method is to use field theory. Field theory is a mathematical framework that describes how fields interact with each other.

DESCRIPTION OF THE FIGURES

Fig. 1 shows an example of a computer system for implementing the method of this document.
Fig. 2 shows examples of matrix product states.
Fig. 3 shows an example of a TEBD algorithm.
Fig. 4 shows an optimised TEBD algorithm.
Fig. 5 shows a flow chart of prior art Schnorr's algorithm.
Fig. 6 shows a flow chart of the method of this document.
Fig. 7 shows a flow chart of a method of decryption of a ciphertext using Schnorr's algorithm.
Fig.8 shows a flow chart of the TEBD algorithm with tropicalisation.
Fig. 9 shows tropicalization used in the TEBD algorithm.

DETAILED DESCRIPTION OF THE INVENTION

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

The prior-art Schnorr's algorithm for factorization of the integer N will be now described.

The Schnorr's algorithm improves the quadratic sieve algorithm by using the complex lattice techniques. The Schnorr's algorithm is based on smooth numbers, the smooth numbers have only small prime factors. The first step of the Schnorr's algorithm is to choose a smoothness bound $B$. The smoothness bound $B$ determines the maximum size of the prime factors. The larger the smoothness bound $B$, the greater chance of finding the smooth number, but also the longer time is needed to find the smooth number.

The second step of the Schnorr's algorithm is to fix a natural number $d \geq 1$ and suppose that all the prime factors of $N$ are less than equal to $p_d$, wherein $p_d$ is the smoothness bound, $B = p_d$.

The positive integer $N$ is the integer that the Schnorr's algorithm aims to factorize. The Schnorr's algorithm uses a congruence of squares method which consists of finding $x, y \in \mathbb{Z}$ such that $x^2 = y^2 \bmod N$ with $x \not\equiv \pm y \bmod N$. According to the Schnorr's algorithm, the integer $N$ can be calculated by computing $gcd(x + y, N)$. For random $x, y$ satisfying $x \not\equiv \pm y \bmod N$ with probability $\geq 1/2$.

The smoothness bound $B$ is an integer that does not have the prime factors $> B$ and $p_i$ is the $i$-th prime number. Fix some $d \geq 1$ and suppose that the positive integer $N$ is free of the prime factors $\leq p_d$. The main computational task of the Schnorr's algorithm is to find $d + 2$ integer tuples $(u, v, k, \gamma)$. The integer tuples (sequence) $u, v$ are $p_d$-smooth numbers, $k$ comprises with the prime factor $N$ and $\gamma > 0$, and fulfil the Diophantine equation:

$$u = v + kN^\gamma$$

Numbers $u$, $v$ with the properties that fulfil the Diophantine equation are called smooth-relation pairs. Calculation of the smooth-relation pairs $u$, $v$ is the main task of the Schnorr's algorithm.

The smooth-relation pairs $u$, $v$ of $p_d$-smooth numbers must satisfy the inequality:

$$|u - kN| <= p_d$$

The solution of the smooth-relation pairs can be found by setting $v = u - kN$. This equation provides the $p_d$-smoothness of smooth-relation number $v$.

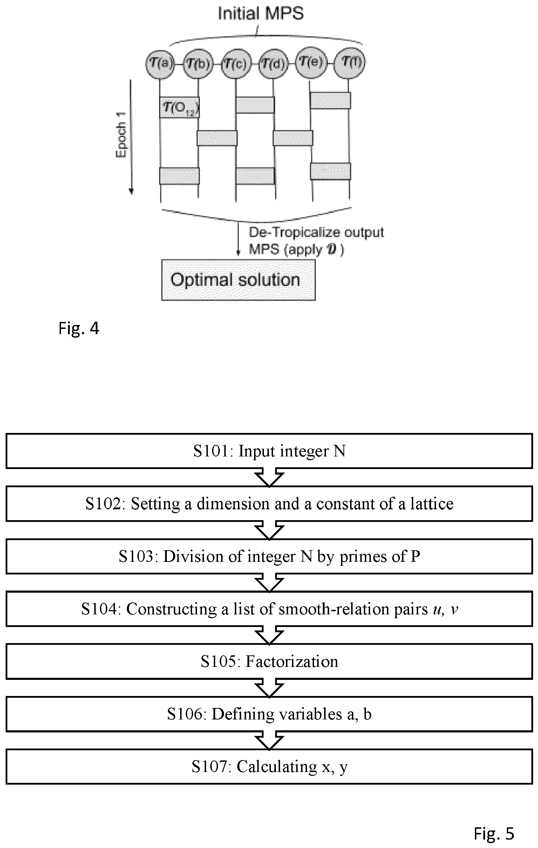

Fig. 5 shows a flow chart of prior art Schnorr's algorithm.

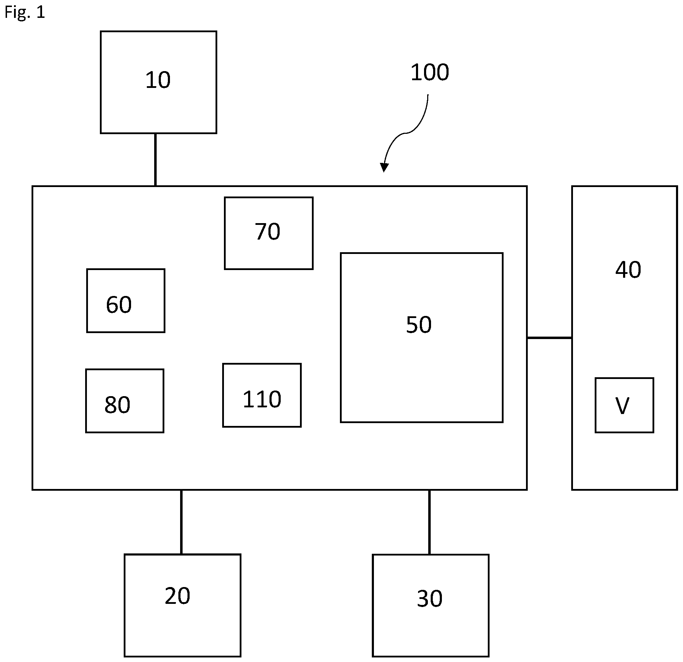

In step S101, the input number N is received to the input of a processor 10 (Fig. 1).

In step S102, a dimension $d$ and a constant $C$ of the lattice $S_p(d, C)$ are set and an extended prime number list P = $\{p_0, p_1, ... , p_d\}$ is formed. Where $p_0 = 1$ and the rest is the usual sequence of the first d prime numbers.

In step S103, a trivial division of $N$ by the primes of P is performed. The factor is returned if the input number $N$ is factorized.

In step S104, a list of at least $d+2$ integer tuples $(u_i, k_i) \in \mathbb{N} \times \mathbb{Z}$ is constructed using the lattice. Where $u_i$ is $p_d$-smooth with

$$u_i = \prod_{i=0}^{d} p_i^{a_{i,j}}$$

Wherein $a_{i,0} = 0$ and

$$|u - kN| <= p_d$$

In step S105, $u_i - k_i N$, for $i \in [\![1, d+2]\!]$ is factorized over P to obtain:

$$u_i - k_i N = u_i = \prod_{i=0}^{d} p_i^{b_{i,j}}.$$

In step S106, variables $a_i$ and $b_i$ are defined such as $a_i = (a_{i,0}, ..., a_{i,d})$ and $b_i = (b_{i,0}, ... , b_{i,d})$.

For every nonzero $c = a_i = (c_1, ..., c_{d+1}) \in \{0, 1\}^{d+1}$ solution of

$$\sum_{j=0}^{d+1} c_i (a_i + b_i) = 0 \bmod 2$$

In step S107, variables $x$ and $y$ are calculated as follows:

$$x = \prod_{j=0}^{d+2} p_j^{\sum_{i=1}^{d+2} c_i(a_{i,j}+b_{i,j})/2} \bmod N$$

and

$$y = \prod_{j=1}^{d+2} p_j^{\sum_{i=1}^{d+2} c_i, a_{i,j}} \; mod \; N$$

In step S108, $gcd(x+y, N)$ is returned if $x \neq \pm y \; mod \; N$ and the method is stopped.

The problem of finding the smooth-relation pair $u, v$ is reduced to the CVP problem for a particular target vector on a particular lattice, for example, a prime number lattice. The probability of obtaining the smooth-relation pair $u, v$ is proportional to the quality of the CVP solution. The CVP problem is solved using classical algorithms such as Babai's algorithm or Block Korkin Zolotarev (BKZ) algorithm. However, Babai's and BKZ algorithms are not capable of solving the CVP problem of the Schnorr's algorithm with a desired accuracy, which results in an unsatisfactory performance of the Schnorr's algorithm.

The present document teaches a quantum inspired algorithm that improves the CVP step of the Schnorr's algorithm.

To improve the CVP step, the classical Schnorr's algorithm implements three main steps. The first step of the CVP prior art improvement is an Lenstra-Lenstra-Lovasz (LLL) lattice basis reduction algorithm of an input lattice basis. The input lattice basis is a set of linearly independent vectors inside an ambient vector space. The properties of a resulting LLL lattice basis can be improved to solve the CVP problem.

The second step of the CVP prior art improvement is projecting a target vector to a Gram-Schmidt orthogonalization method of the LLL lattice basis. Given the LLL lattice and a target point $\sim x$, the CVP aims to find a lattice point which is closest to the target point x. The lattice point is a point at an intersection of two or more linearly independent vectors of the LLL lattice. This second step returns an output vector close to the target vector with an approximation error. Coefficients of the output vector are floating-point numbers. The LLL lattice basis is not necessarily orthogonal, thus the Gram-Schmidt orthogonalization of the LLL lattice basis does not necessarily returns a basis of the lattice. In some cases, the Gram-Schmidt orthogonalization of the LLL lattice basis returns only the subspace of the ambient vector space in which the lattice LLL is embedded. In other words, the lattice points of the LLL lattice are generated by translation of vectors which are not orthogonal. The ambient vector space can be described with a basis of perpendicular vectors, for example, the three cartesian axis. However, to generate the lattice points of the LLL lattice, the non-orthogonal vectors need to be used.

The third step of the CVP prior art improvement is building a candidate closest vector by rounding, to the nearest integer number, the floating-point coefficients of the output vector obtained in the second step.

The approximation error of the candidate closest vector has integer coefficients and depends significantly on the choice of rounding the floating-point coefficients to the nearest integer number used in the third step. The floating-point coefficient in the third step can be rounded up to the nearest integer number or down to the nearest integer number. Therefore, there are $2^n$ different options for choosing the candidate closest vector, where n is the dimension of the lattice basis and equal to a size of the target vector.

The classical Schnorr's algorithm fixes a particular choice of the rounding the coefficients, for example, by rounding down all the floating-point coefficients and by returning, therefore, one of the possible $2^n$ different output vectors.

In contrast to the prior art quantum algorithms, the advantage of a quantum-inspired Schnorr's algorithm described in this document is that this enhanced algorithm is already scalable to hundreds of qubits.

Fig. 1 shows an example of a computing system for implementing the computer-implemented method of this document. Fig. 1 shows a system 100 having a (classical) processor 10 with an input device 20 and an output device 30. The system 100 is shown using a classical processor 10, but it will be appreciated that the system 100 can be extended with the addition of a quantum processor connected to the classical processor 10. The system 100 further includes a decryption module 110 which is used to decrypt a cyphertext encoded, for example, using the RSA algorithm.

The TEBD algorithmic method is implemented by software on a TEBD module 50 running in the processor 10. An input to the TEBD algorithm running in the processor 10 is a set of integers u, v, k, $\gamma$ and a Hamiltonian $H(x_1, x_2, \ldots x_n)$. This input is provided through the input device 10 and stored in a memory 40 which is accessible from the TEBD module 50. The integers $u, v, k, \gamma \in Z$ such that $x^2 = y^2 \; mod \; N$, with $N \geq 1$ be a composite integer that needs to be factorized for the classical optimization problem.

In the classical optimization problem, the Hamiltonian $H$ encodes with the smooth-relation pairs representative of the problem to be solved. To set up the TEBD algorithm for the classical optimization problem, the smooth-relation pairs need to be mapped to the Hamiltonian. This mapping is done in an implementation module 80 in the processor 10. It will be understood that the Hamiltonian $H$ is a quantum Hamiltonian function that acts on a vector space V. The vector space V is spanned by classical states corresponding to classical configurations of the integers $u, v, k, \gamma$. The vector space V is a set of all vectors of the form:

$$V = \sum_{x_1, x_2, \dots x_n} C\, x_1, x_2, \dots x_n \mid x_1, x_2, \dots x_n >$$

where coefficients $C\, x_1, x_2, \dots x_n$ are real numbers and $\mid x_1, x_2, \dots x_n >$ is a quantum state corresponding to the classical configuration of the integers $u, v, k, \gamma$.

An output of the TEBD module 50 implementing the TEBD algorithm is provided at the output device 30 and is the ground state of the Hamiltonian. This output is, in the case of the classical optimization problem, is the smooth-relation pairs $u, v$ which satisfies the Diophantine equation (e.g., a classical state) and will be a solution to the classical optimization problem. For more general Hamiltonian functions, the ground state could be an entangled state of the form of the vector space $V$ with several non-zero coefficients $C\, x_1, x_2, \dots x_n$.

The Hamiltonian can be decomposed as a sum of two smaller variable Hamiltonian as follows:

$$H(x_1, x_2, \dots x_n) = \sum_{ij} H_{ij}(x_i, x_j) \dots \qquad (1)$$

It should be noted that in the sum of Hamiltonians, there is exactly one two-variable Hamiltonian terms for every pair of variables. A compact notation of the Hamiltonian will be further used: $H_{ij} = H_{ij}(x_i, x_j)$. This decomposition of the input Hamiltonian is carried out in a decomposition module 60 in the processor 10.

The TEBD algorithm iteratively evolves in the TEBD module 50 from the input data. The input data are a set of integers $u, v, k, y$ which are represented by a vector inside the vector space V. The TEBD algorithm iteratively evolves for a time $T = N \times t$ via an imaginary time-evolution operator O:

$$O = \exp(-t \times H) \qquad (2)$$

The state at time $t=k+1$ is obtained by multiplying a state vector at time $k$ with the imaginary time-evolution operator $O$:

$$\mid state\ at\ T = k + 1 >= \exp(-t \times H)\mid state\ at\ T = k > \cdots(3)$$

It can be shown that if the initial state is not orthogonal to the ground state, then the imaginary time-evolution operator $O$ will tend to the ground state as longer times are involved, e.g., when the value of the time $T$ becomes longer.

The ground state is expected to be reached when a convergence of physical quantities is determined to have reached a pre-determined threshold. The convergence of physical quantities is the value of the cost function. The pre-determined threshold for a determined set of parameters (for example coefficients x_1, x_2, ... x_n) can be adapted to each optimization problem. In one non limiting example, the threshold is 1^(e-10).

One issue is that with the increase in size of the classical optimization problem, i.e., with an increase in the number of the integers, then the size of the state vectors and the imaginary time-evolution operator $O$ increase exponentially.

Two ideas can be applied to the TEBD algorithm which make the TEBD algorithm efficient and scalable algorithm.

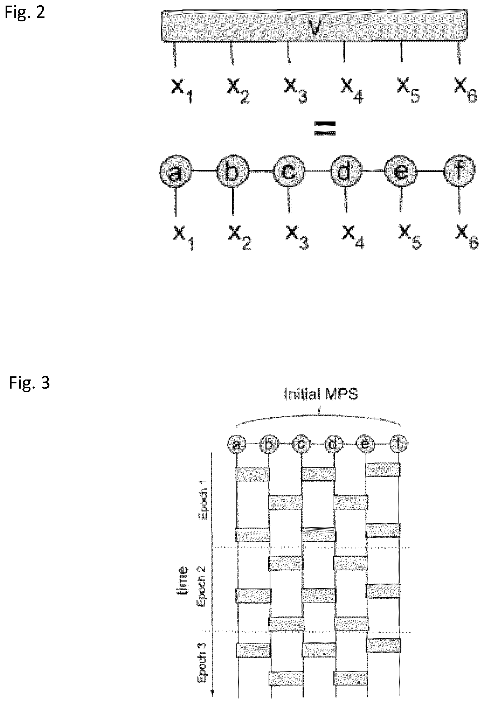

The first idea of the TEBD algorithm is to restrict the time evolution of the TEBD algorithm to only to a particular subset of states in the vector space $V$ called Matrix Product States (MPS), or Tensor Trains as illustrated in Fig. 2. This subset of states is stored in the memory 40. The MPS is a type of Tensor Network (TN) in which the tensors are arranged in a one-dimensional geometry. The MPS can represent a large number of classical states extremely well despite the simple structure of the MPS.

One way to deal with exponentials presented in the equation (2) is to decompose the imaginary time-evolution operator $O$ for "sufficiently small" time steps using the Suzuki-Trotter decomposition. The Suzuki-Trotter decomposition provides an approximation to a matrix exponential by decomposing the matrix exponential into a product of simpler operators. Specifically, the Suzuki-Trotter decomposition decomposes the exponential of a sum of two operators A and B as follow:

$$\exp(t(A + B) \approx \exp(tA) . \exp(tB)$$

Where t is a small time step. This decomposition allows the split of the time evolution into a number of separate time steps, each time step corresponding to the exponentiation of a single operator A, B. By choosing an appropriate time step t and iterating the decomposition, it is possible to approximate the time evolution of the system.

The second idea is to decompose (approximately) a total n-variable imaginary time-evolution operator $O$ as a product of two variable operators:

$$O \approx E^N = \left( \pi_{ij} \exp\left( -t \times H_{ij} \right) \right)^N \dots \qquad (4)$$

An operator $E$ implements a single epoch $N$ of the time evolution of the imaginary time-evolution operation O, for example, a single round of all two-variable time-evolution operators $O$ for the time step $t$. The two-variable time evolution $\exp(-t \times H_{ij})$ should be understood as an identity operator on all remaining variables $i$ and $j$.

It will be appreciated that, if the result of the time evolution of the Hamiltonian depends on the order in which the two-variable time evolutions are applied to the Hamiltonian, the Suzuki-Trotter decomposition is only an approximate decomposition. Mathematically, the time evolution is an order-dependent function if the two-variable Hamiltonians (e.g., Hamiltonian matrices) do not commute. The two-variable Hamiltonian functions do not commute when there are coefficients $i, j$ and $i, k$ such that $H_{ij} \times H_{ik} \neq H_{ik} \times H_{ij}$. The Suzuki-Trotter approximation error in this (non-commutation case) is of the second order - $t^2$. Therefore, the parameter of the time step t of the TEBD algorithm for the evolution has to be chosen carefully to minimise the approximation error, but to avoid too long computation time.

The TEBD algorithm converges to the ground state after a relatively long-time evolution, for example, when the epoch $N = T/t$ is large. As noted above, to keep the Suzuki-Trotter approximation error small, the steps of the time evolution have to be carried out during the small period of time step $t$.

According to the decomposition of the imaginary time-evolution operator O shown in equation (4), the TEBD algorithm reduces in the TEBD module 50 to applying, on a chosen initial MPS from the memory 40, a sequence of small imaginary time-evolutions on pairs of neighbouring variables until convergence.

Fig. 2 shows an example of the TEBD algorithm as implemented in the TEBD module 50. Rectangular boxes in Fig. 2 implement the two-variable time-evolutions. The rectangular boxes in Fig. 2 are also called "gates" in analogy to quantum circuits. However, unlike the quantum circuits, the gates are not unitary.

The TEBD algorithm running in the TEBD module 50 proceeds by iteratively updating the MPS stored in the memory 40 by applying the gates one by one to the parameters of the MPS. After a sufficient number of epochs N, typically a very large number of epochs, the value of the MPS converges to the ground state of the Hamiltonian.

When the TEBD algorithm is applied to the classical optimization problem, the ground state of the Hamiltonian is an approximation to the optimal value of the smooth-relation pairs of the classical optimization problem. The use of the MPS, the decomposition of the imaginary time-evolution operator O into two-variable gates, and the ability to update the MPS only locally for the two-variable gates are the main reasons for high scalability of the TEBD algorithm.

The most computationally intensive step is updating the values of the parameters in the MPS stored in the memory 40 after applying the gates. The updating of the MPS comprises a sequence of matrix multiplications and a singular value decomposition carried out in the TEBD module 50. The singular value decomposition is the main computational challenge of the TEBD algorithm running in the TEBD module 50 on the classical processor 10.

The TEBD algorithm has been a common algorithm for finding the ground states of the quantum Hamiltonians $H$. However, applying the TEBD algorithm to find the ground state of classical Hamiltonians is a known challenge in the classical optimization problem. The structural difference between the quantum Hamiltonian and the classical Hamiltonian can be explained mathematically. In the classical systems, classical operators commute with each other.

Therefore, a direct application of the TEBD algorithm to the classical optimization problem (formulated as a Hamiltonian problem) does not exploit the inherent classical structure of the classical optimization problem. Numerical experiments show that the TEBD algorithm tends to explore highly entangled quantum states during the search in the vector space for the optimal smooth-relation pairs of the classical optimization problem.

This exploring of the highly entangled quantum states is a disadvantage of the TEBD algorithm since the computational cost of running the TEBD algorithm on the classical processor 10 increases with the amount of entanglement of the quantum states generated during the TEBD algorithm.

In the present document, the adaptation of the TEBD algorithm for the classical optimization problem is described. The adaptation of the TEBD algorithm exploits the classical structure of the classical optimization problem that improves the performance and accuracy of the TEBD algorithm.

The present document adapts the TEBD algorithm in the TEBD module 50 to tropical algebra instead of regular algebra. Regular algebra is known to be large and complex system. The TEBD algorithm is based on the regular algebra of complex matrices. However, only a special subset of matrices needs to be used in the case of classical combinatorial optimization problem. The special subset of matrices that is used in the improved TEBD algorithm is the tropical matrices.

The tropical algebra is employed for solving large-sized integer numbers. In the case of the classical optimization problem, the two-variable Hamiltonian terms $H_{ij}$ are diagonal matrices which commute with each other. The decomposition of the imaginary time-evolution operator $O$ described by the equation (4) is exact in the case of the diagonal matrices.

The exact decomposition means that there is no Suzuki-Trotter approximation error, as known in the prior art and discussed above. Since there is no Suzuki-Trotter approximation error, the time step $t$ does not have to be small in the equation (4). Therefore, it is possible to choose the time step $t$ to be as large as possible.

The TEBD algorithm converges to the ground state when $T \rightarrow \infty$, and that $T = N \times t$, where $t$ is the time-step for the time-evolution and $N$ is the number of the epochs. As noted above, there is no restriction on how large the time step $t$ has to be. It is therefore possible to take the limit of time step $t \rightarrow \infty$ and set the number of the epochs $N=1$. Therefore, the optimal solution of the classical optimization problem can be achieved using only one epoch N of the time evolution, when the time step $t$ is set to be a very large number.

However, setting the time step $t$ to a large number of results in "ill-conditioned" matrices. For example, a small change in inputs variables causes a large change in dependent variables. Matrix operations used in the TEBD module 50 are the matrix multiplication and the singular value decomposition. The "ill-conditioned" matrices can produce therefore unpredictable results. Therefore, the main computational challenge is to operate on the matrices with exponentially small entries.

Since the Hamiltonian terms $H_{ij}$ are diagonal, the two-variable gates $U_{ij} = \exp(-t \times H_{ij})$ are also diagonal matrices as follows:

$$diag(\exp(-t \times p), \exp(-t \times q), ..., \exp(-t \times r))$$

The arrays comprising the initial MPS can be chosen to be composed of zeros and ones, which can be expressed as follows:

$$0 = \exp(-t \times \infty) \; and \; 1 = \exp(-t \times 0) \; ... \qquad (5)$$

All numbers in the problem are of the form:

$$\exp(-t \times p) \; with \; t \rightarrow \infty \; ... \qquad (6)$$

Therefore, most of the matrix operations, except the singular value decomposition, used in the TEBD algorithm comprise multiplying and adding numbers of the form expressed in the equation (6). Therefore:

$$\exp(-t \times p) + \exp(-t \times q) = \exp(-t \times \min(p, q)) \; ... \quad (7)$$

$$\exp(-t \times p) \times \exp(-t \times q) = \exp(-t \times (p + q)) \; ... \qquad (8)$$

An equation in the equation (7) is without Suzuki-Trotter approximation error when the time step $t \rightarrow \infty$. The result of the expression in the equation (7) is approximate (with the Suzuki-Trotter approximation error) when the time step $t$ takes finite values.

Since the numbers of the equation (6) are in the form of $\exp(-t \times p)$ with $t \rightarrow \infty$, it is possible to use the concepts of tropical geometry and restrict the solution of the equation (6) to the exponential components $p, q$. Therefore, the equations (7) and (8) can be expressed as follows:

$$p \oplus q = \min(p, q) \; ... \qquad (9)$$

$$p \odot q = p + q \; ... \qquad (10)$$

Real numbers along with the positive infinity ($\infty$) that fulfil the equations (9) and (10) are related to the tropical algebra. The tropical algebra is defined by replacing a usual addition operator for ordinary real numbers with a min operator and a product or multiplication operator with a sum operator. It is known that ($-\infty$) acts as zero element for tropical numbers since $-\infty \oplus p = p$ and $-\infty \odot p = -\infty$. A zero element acts as a multiplicative identity since $0 \odot p = p$. The min operator $\oplus$ and the sum operator Q have commutative, associative, and distributive properties. It is known that the min operator $\oplus$ and the sum operator Q have no additive inverse.

The equations (7) and (8) are a one-dimensional representation of tropical algebra T ($\oplus$, $\odot$). The tropical numbers provide a way to solve the problem of "ill-conditioned" matrices in the TEBD algorithm. Changing the regular matrices with exponentially small values to the tropical matrices of the equations (9) and (10) avoids operating directly with the ill-conditioned matrices known in the prior art TEBD algorithms.

In the TEBD algorithm of the present document, a tropicalization map T is implemented in a tropicalization module 70. As is known from tropical algebra, the tropicalization module 70 converts the exponentials to a real number:

$$T: \exp(-t \times p) \mapsto p \dots \qquad (11)$$

Therefore, a corresponding de-Tropicalization map D (also in the tropicalization module 70) is:

$$D: p \mapsto \exp(-t \times p) \dots \qquad (12)$$

As noted above, by tropicalizing the TEBD algorithm, it is avoided to work with the ill-conditioned matrices. All the matrices of the TEBD algorithm are diagonal and exponentiating all the matrices with a large parameter of the time-step $t$.

The tropical TEBD algorithm described in the present document enables optimization of the computational resources by exploring an optimal subspace of large quantum space while looking for the optimal classical solution of the classical optimization problem.

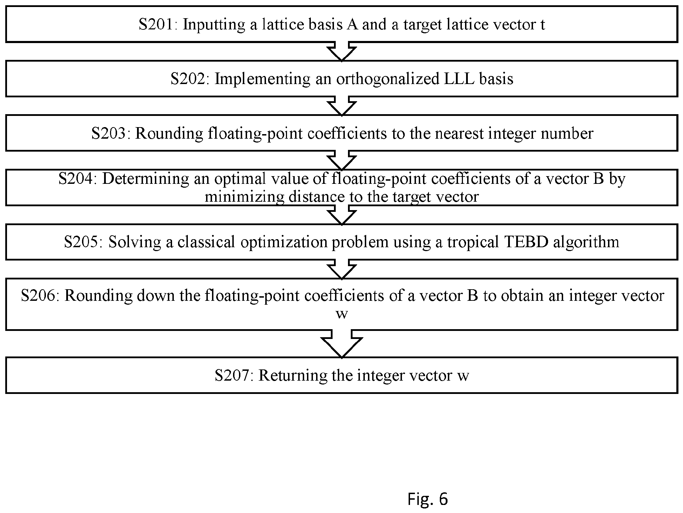

The optimized tropical TEBD algorithm is shown in Fig. 6.

In step S201, a lattice basis and a target lattice vector are input to the classical processor 10.

In step S202, an orthogonalized LLL basis is calculated.

In step S203, the target lattice vector is projected to the orthogonalized LLL in order to obtain the vector v.

In step S204, the floating-point coefficients are rounded up or down to the nearest integer.

In step S205, an optimal value of binary variables is determined by minimizing distance to the target lattice vector.

In step S206, closest vector problem is solved using the tropical TEBD algorithm.

In step S207, the floating-point coefficients are rounded down or up to obtain an integer vector $w$. Coefficients are rounded up or down according to solution obtained by the combinatorial optimization.

In step S208, the integer vector $w$ is returned.

The integer vector $w$ being the lattice point closest to the target point x.

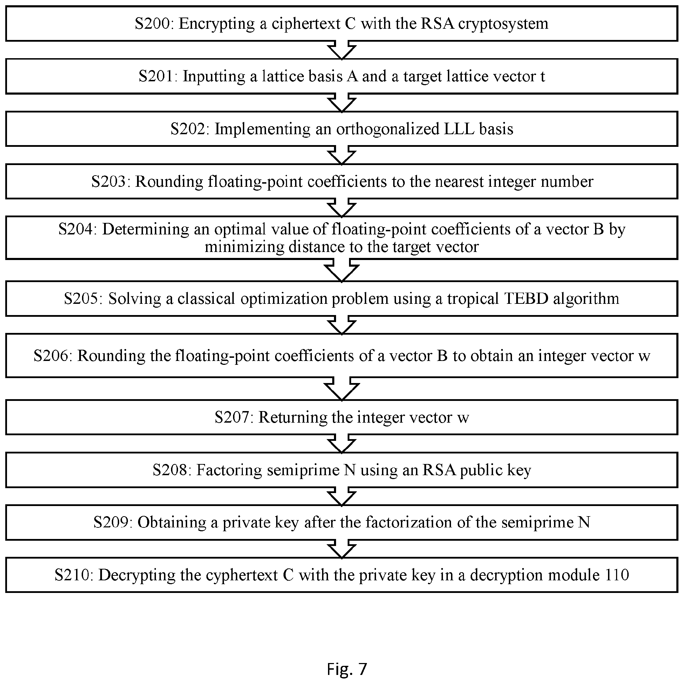

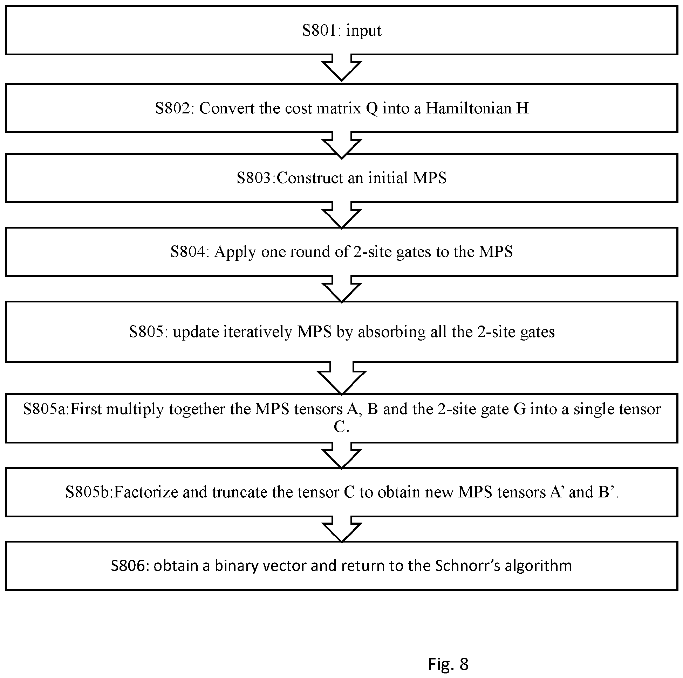

As will be detailed later with reference to Figure 8, Steps S205 - 207 in Fig. 7 can be performed with tropicalisation according to this disclosure.

The remaining steps of Fig. 7 are part of the logical flow of the Schnorr's algorithm.

The run time complexity of Schnorr's algorithm for factoring the integer $N$ is $exp((1/2 + o(1)) \sqrt{(log(N) \, loglog(N))})$. This means that the running time of the algorithm grows roughly as the square root of the product of the number of digits $d$ in $N$ and the logarithm of d. In other words, the algorithm is sub-exponential, meaning it is faster than the brute-force algorithm but slower than most known polynomial-time algorithms.

The performance of Schnorr's algorithm depends on the chosen smoothness bound $B$. A larger smoothness bound $B$ can increase the chances of finding smooth numbers and therefore reduce the running time of the algorithm, but it also requires more computational resources to check.

In practice, the running time of Schnorr's algorithm can vary widely depending on the size and structure of the input integer $N$, the choice of smoothness bound B, and the efficiency of the implementation.

The method set out in this document can be used to factorise a large number and thus decrypt encrypted messages. In one non-limiting example, the steps S201-S207 of the optimized tropical TEBD algorithm shown on Fig. 6 can be implemented in a method of decryption of a ciphertext using Schnorr's algorithm shown on Fig. 7. In addition to the steps S201-S207 shown on Fig. 6, Fig. 7 also comprises a step S200 and steps S208-S210.

The RSA cryptosystem, for example, uses an encryption key to encrypt in step S200 a message. The encryption key is public and is based on the semiprime (i.e., product) N of two randomly chosen large prime numbers (often termed p and q). As previously noted, the security of the RSA (and other cryptosystems) relies on the fact that the factorisation of the semiprime N is challenging. The method of this document is incorporation into the decryption module 110 using Schnorr's algorithm to decrypt a ciphertext C which has been encoded using the RSA cryptosystem. The decryption module 110 uses an RSA public key (N, e) and factors in step S208 the semiprime N. An RSA key setup routine already turns the public exponent e, with this prime factorization, into a private exponent d, and the same algorithm will enable the decryption module to obtain in step S209 the private key after factorisation of the semiprime N. The ciphertext C can then be decrypted in step S210 with the private key identified in the decryption module 110.

Fig.8 is a workflow of the steps of the tropical TEBD algorithm, which is used to perform steps S205 to S207 of Fig. 7, i.e. determine an optimal value of binary variables by minimizing distance to the target lattice vector, solving the closest vector problem using the tropical TEBD algorithm., and rounding the floating-point coefficients to obtain an integer vector w of the Schnorr's algorithm.

In a first step S801, a list of N binary variables $\{x_i\}$ and an arbitrary quadratic cost function $\sum_{ij} Q_{ij} x_i x_j$

where Q is a N × N matrix of real numbers are inputted. The tropical TEBD algorithm estimates the value of the binary variables that minimizes this cost function.

The discrete variables of the cost function are input to the computer system 100. The mapping module 80 maps the variables of the cost function to the Hamiltonian ($\llbracket H(x) \rrbracket \_1, x\_2, \ldots x\_n)$) in a mapping step S610. The vector space V spanning the classical states corresponding to the classical configurations of the discrete variables of the cost function is created in a vector creation step S620 in the processor 10.

Next, in step S802, the cost matrix Q is converted into a Hamiltonian H. The Hamiltonian ($\llbracket H(x) \rrbracket \_1, x\_2, \ldots x\_n)$) can be decomposed in the decomposition module 60 to a sum of two variable Hamiltonians having two variable Hamiltonian terms. The terms of the Hamiltonian can be tropicalised.

Like the standard TEBD algorithm, the tropical TEBD algorithm also represents the optimal solution as a tropical version of a tensor network called Matrix Product State (MPS). In step S803, an initial MPS is constructed that will be evolved in imaginary time to the optimal solution.

Tropicalization of all the gates and the initial MPS arrays in the tropicalization module 70 can be made by applying the tropicalization map T component to each MPS array (stored in the memory 40). The tropicalization of the initial MPS arrays results in the MPS arrays made of multiplicative units (operator ⊙) and additive units (operator ⊗) of the tropical algebra as shown in the equation (5).

The initial tropical MPS is made of zeros and ones.

In step S804, the tropical TEPD algorithm applies one round of 2-site gates to the MPS. With other words, the MPS is updated by absorbing a single 2-site gate.

It should be noted the single 2 site gate is simply a 2-site Hamiltonian term in the tropical TEBD, opposed to exponential of the 2-site Hamiltonian that is used in the standard TEBD

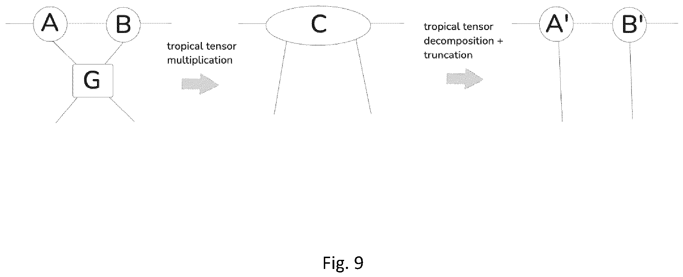

Then, at step 805, the MPS can be updated iteratively by absorbing all the 2-site gates. The following steps are involved in applying a single 2-site gate on two tensors A and B of the MPS, as seen on Fig. 9:

(i) First multiply together the MPS tensors A, B and the 2-site gate G into a single tensor C (step 805a). This multiplication is carried out as tropical multiplication as opposed to complex multiplication in the standard TEBD.

The matrix multiplications can be implemented as the real numbers of the regular algebra have been replaced with tropical numbers of the tropical algebra.

The matrix singular value decomposition is replaced with a tropical matrix factorization according to the equation (13):

$$M = A \odot B \qquad (13)$$

where M, A and B are *n × m, n × k,* and *k × m* tropical matrices.

(ii) Factorize and truncate the tensor C to obtain new MPS tensors A' and B'. Again this factorization is carried out in the tropical sense, such that when A' and B' are multiplied tropically, tensor C is recovered (step 805b).

It should be noted that tensor C is approximately recovered because there is a truncation involved here, where the algorithm discards a part of the tensor C to control the size of the new tensors A' and B', which determines the computational cost of the algorithm.

After one epoch of gates, the tropical algorithm returns the MPS at step S806, contract together the resulting MPS to obtain a binary vector which is returned back to Schnorr's algorithm. The resulting MPS is efficient because the optimal MPS will be a product state.

The resulting MPS arrays are de-tropicalized in the tropicalization module to obtain a regular MPS array in the memory 40. The de-tropicalized regular MPS array is a sought-optimal solution of the cost function.

In both the standard and tropical TEBD algorithm based on the complex algebra, the tensor C is obtained by reshape tensors A and B (each a three-dimensional array) into matrices (i.e., two dimensional arrays) mA and mB. If A is a x b x c array and B is a c x d x e array, then mA has dimensions (a.b) × c and mB has dimensions c × (e.f) where the dot indicates usual number multiplication

The second step in the standard TEBD algorithm is the step of multiplications of the matrices mA and mB to obtain mC having dimensions (a.b) × (e.f). In the tropical TEBD algorithm, the matrices mA and mB are multiplied according to tropical algebra

The third and fourth step in the standard TEBD algorithm are the Singular value decomposition followed by the truncation. With the singular value decomposition, mC is egal to U × S × V, with U and V being unitary matrices and S is a diagonal matrix with non-negative entries. With the truncation step, only the largest \chi singular values in S are kept and ther rest is discarded, with \chi is the specified bond dimension of the MPS. This truncation is carried out by simply deleting the rows and columns of S corresponding to the remaining singular values, and the corresponding columns and rows of U and V respectively. The result of the VD and truncation steps is mC' = U' × S' × V' where U', S', V' are the truncated matrices.

Finally, by suitable manipulation, i.e.. reshape and matrix multiplication of U' and V', the new MPS tensors A' and B' is obtained.

In the tropical TEBDalgorithm, the Singular value decomposition and truncation steps above are replaced by a single low-rank matrix factorization of mC into the tropical product of tropical matrices mA' , mB', i.e. mC = mA'⊙ mB'. Here, the multiplied dimension of mA' and mB' is equal to \chi, with \chi is the specified bond dimension of the MPS. With other words, the matrices mA' and mB' are obtained by solving a set of simultaneous equations obtained by simply expanding out the components of the above tropical matrix multiplication. These equations involve the usual max() and addition operations for complex numbers and can be solved using standard equation solvers.

Finally, by suitable manipulation, i.e.. reshape and matrix multiplication of U' and V', the new MPS tropical tensors A' and B' is obtained.

By tropicalizing the TEBD algorithm, it is avoided to work with the ill-conditioned matrices. All the matrices of the TEBD algorithm are diagonal and exponentiating all the matrices with a large parameter of the time-step t.

The standard TEBD algorithm is widely used to find ground states of Hamiltonians involving hundreds or thousands of variables. In the context of the present disclosure, combinatorial optimization problems can be framed as finding the ground state of a large Hamiltonian. However, the standard TEBD is not ideal for this task because it was designed for solving quantum Hamiltonians, while combinatorial optimization involves classical Hamiltonians.

Classical Hamiltonians have a simpler and different mathematical structure compared to quantum Hamiltonians, which the standard TEBD does not account for. Specifically, classical Hamiltonians can be better represented using tropical algebra, whereas quantum systems rely on complex algebra. The standard TEBD can be seen as a classical simulation of a quantum circuit, consisting of multiple rounds or "epochs" of two-body gates (where each round applies gates to all qubits in the system). The computational cost of TEBD scales linearly with the number of epochs required.

One of the key advantages of the tropical TEBD algorithm proposed in the present document is that it significantly reduces this cost by requiring far fewer epochs, possibly just one. This efficiency comes from leveraging the tropical algebra structure inherent in classical Hamiltonians, which simplifies the problem and reduces computational overhead.

The prior work by Jin-Guo Liu, Lei Wang, and Pan Zhang, "Tropical Tensor Network for Ground States of Spin Glasses," arXiv:2008.06888, Phys. Rev. Lett. 126, 090506 (2021), demonstrates how to combine tensor networks with tropical algebra. However, their method only addresses one key component of tensor network algorithms: (1) tensor multiplication. The prior work does not introduce tropical versions of (2) tensor decompositions and truncations, which are essential for introducing approximations and scaling to larger systems. As a result, their approach is limited to producing exact results for small tensor networks.

The present invention therefore improves upon this by developing a tropical tensor network algorithm, specifically the tropical TEBD algorithm, that additionally incorporates tropical tensor decompositions and truncations. This makes the tropical TEBD algorithm scalable and capable of handling larger systems. Moreover, the truncations and the resulting error are carefully controlled, allowing for efficient approximations without sacrificing accuracy.

REFERENCE NUMBER

**[0166]**

| | |
|---|---|
| 10 | Processor |
| 20 | Input device |
| 30 | Output device |
| 40 | Memory |
| 50 | TEBD module |
| 60 | Decomposition module |
| 70 | Tropicalization module |
| 80 | Implementation module |
| 100 | System |
| 110 | Decryption module |
| V | Vector space |

**Claims**

1. A computer implemented method for solving a classical optimization problem of integer factorization implemented on a digital computer system comprising a classical processor (10) adapted to execute a time evolving block decimation (TEBD) algorithm, the method comprising:

- inputting (S201) a lattice basis A and a target lattice vector *t* to an input device (20) of the classical processor (10);
- implementing (S202) a lattice basis reduction algorithm on the lattice basis A in an implementation module (80), thereby obtaining a reduced orthogonal lattice basis A';
- projecting the target lattice vector t on the reduced orthogonal lattice basis A';
- building (S204) a closest vector B to the target lattice vector t;
- optimizing (S205, S206) the closest vector B using the time-evolving block decimation algorithm by the classical processor (10), wherein the time evolving block decimation is a tropical time evolving block decimation,
- wherein the step of optimizing (S205) the closest vector B comprises minimizing a cost function by

  ○ convert the cost function into a Hamiltonian ( $[\![H(x)]\!]\_1,x\_2,\ldots x\_n)$ ), the Hamiltonian ( $[\![H(x)]\!]\_1,x\_2,\ldots x\_n)$ ) being decomposed into a sum of two variable Hamiltonians having two variable Hamiltonian terms;
  ○ tropicalize terms in the Hamiltonian ($H(x_1, x_2, \ldots x_n)$) in a tropicalisation module (80)
  ○ choosing (S630) an initial Matrix Product State representative of the cost function, wherein the initial Matrix Product State is made of tropical zeros and tropical ones;
  ○ iteratively apply a time-evolution operator to the Matrix Product State until a ground state is reached; and

- recovering the resulting Matrix Product State to obtain an integer vector; and
- outputting (S207) the integer vector *w,* the integer vector w representing the shortest distance between the lattice basis A and the target lattice vector *t*

2. The computer implemented method of claim 1, further comprising calculation of smooth-relation pairs from the integer vector w.

3. The computer implemented method of any of above claims, wherein the lattice basis reduction algorithm is a Lenstra-Lenstra-Lovasz lattice basis reduction algorithm.

4. The computer implemented method of any of above claims, wherein building a closest vector B comprises determining (S204) floating-point coefficients of the optimal closest vector B.

5. The computer implemented method of any of above claims, further comprising rounding down or up floating-point coefficients of the closest vector B to obtain the integer vector *w.*

6. The computer implemented method of any of above claims, further comprising applying (S203) a rounding function to the reduced orthogonal lattice basis A'.

7. The computer implemented method of any of above claims, wherein the shortest distance between the lattice basis A and the target lattice vector t is representative of one of a lattice-based cryptography, post-quantum cryptographic protocols, number theory.

8. A computer system for solving a classical optimization problem of integer factorization implemented on a digital computer system comprising:

   - a memory (40) for storing data relating to a lattice basis A, a target lattice vector t and executable computer modules;
   - a processor (10) for executing the executable computer modules, wherein the executable computer modules comprising:
   - an implementation module (80) for implementing (S202) a lattice basis reduction algorithm on the lattice basis A; and
   - - a TEBD module (50) for optimizing (S205) the optimal closest vector B using a tropical time-evolving block decimation algorithm by the classical processor (10), wherein TEBD module (50) is adapted to minimizing a cost function by

     ○ converting the cost function into a Hamiltonian ( $[\![H(x)]\!]\_1,x\_2,\cdots x\_n)$), the Hamiltonian (

$$\llbracket H(x) \rrbracket\_1, x\_2, \ldots x\_n)$$ ) being decomposed into a sum of two variable Hamiltonians having two variable Hamiltonian terms;

- ○ tropicalizing terms in the Hamiltonian ($H(x_1, x_2, \ldots x_n)$) in a tropicalisation module (80)
- ○ choosing (S630) an initial Matrix Product State representative of the cost function, wherein the initial Matrix Product State is made of tropical zeros and tropical ones;
- ○ iteratively applying a time-evolution operator to the Matrix Product State until a ground state is reached; and

recovering the resulting Matrix Product State to obtain an integer vector,, the integer vector w representing the shortest distance between the lattice basis A and the target lattice vector.

9. The computer system of claim 8, further comprising a tropicalization module (70) for implementing a tropicalization map T and a de-Tropicalization map D.

10. The computer system of claim 8, further comprising a decomposition module (60) for decomposition of a Hamiltonian into two-variable Hamiltonians.

11. A computer system for decrypting cyphertext, wherein the computer system comprises a decryption module (110) implementing an algorithm for decrypting the cyphertext, and wherein the algorithm uses the method of at least one of claims 1 to 7.

12. Use of the method according to at least one of claims 1 to 7, wherein the shortest distance between the lattice basis A and the target lattice vector t is representative of one of a lattice-based cryptography, post-quantum cryptographic protocols, number theory.

Fig. 1

Fig. 2

Fig. 3

Fig. 4

| S101: Input integer N |
| --- |

| S102: Setting a dimension and a constant of a lattice |
| --- |

| S103: Division of integer N by primes of P |
| --- |

| S104: Constructing a list of smooth-relation pairs $u$, $v$ |
| --- |

| S105: Factorization |
| --- |

| S106: Defining variables a, b |
| --- |

| S107: Calculating x, y |
| --- |

Fig. 5

S201: Inputting a lattice basis A and a target lattice vector t

S202: Implementing an orthogonalized LLL basis

S203: Rounding floating-point coefficients to the nearest integer number

S204: Determining an optimal value of floating-point coefficients of a vector B by minimizing distance to the target vector

S205: Solving a classical optimization problem using a tropical TEBD algorithm

S206: Rounding down the floating-point coefficients of a vector B to obtain an integer vector w

S207: Returning the integer vector w

Fig. 6

S200: Encrypting a ciphertext C with the RSA cryptosystem

S201: Inputting a lattice basis A and a target lattice vector t

S202: Implementing an orthogonalized LLL basis

S203: Rounding floating-point coefficients to the nearest integer number

S204: Determining an optimal value of floating-point coefficients of a vector B by minimizing distance to the target vector

S205: Solving a classical optimization problem using a tropical TEBD algorithm

S206: Rounding the floating-point coefficients of a vector B to obtain an integer vector w

S207: Returning the integer vector w

S208: Factoring semiprime N using an RSA public key

S209: Obtaining a private key after the factorization of the semiprime N

S210: Decrypting the cyphertext C with the private key in a decryption module 110

Fig. 7

S801: input

S802: Convert the cost matrix Q into a Hamiltonian H

S803:Construct an initial MPS

S804: Apply one round of 2-site gates to the MPS

S805: update iteratively MPS by absorbing all the 2-site gates

S805a:First multiply together the MPS tensors A, B and the 2-site gate G into a single tensor C.

S805b:Factorize and truncate the tensor C to obtain new MPS tensors A' and B'.

S806: obtain a binary vector and return to the Schnorr's algorithm

Fig. 8

tropical tensor
multiplication

tropical tensor
decomposition +
truncation

Fig. 9

Europäisches
Patentamt

European
Patent Office

Office européen
des brevets

# EUROPEAN SEARCH REPORT

Application Number

EP 24 20 3716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WILLIE ABOUMRAD ET AL: "Quantum and Classical Combinatorial Optimizations Applied to Lattice-Based Factorization", ARXIV.ORG, CORNELL UNIVERSITY LIBRARY, 201 OLIN LIBRARY CORNELL UNIVERSITY ITHACA, NY 14853, 15 August 2023 (2023-08-15), XP091592988, * Section 3 * | 1-12 | INV. H04L9/30 |
| A | SCHNORR CLAUS PETER ED - LEE SEONG-WHAN ET AL: "Factoring Integers by CVP Algorithms", 31 December 2013 (2013-12-31), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 73 - 93, XP047121942, ISBN: 978-3-540-74549-5 * Sections 2,3,4,5 * | 1-12 | |
| A | DIREBIESKI YURI LUCAS ET AL: "Security Impact Analysis of Degree of Field Extension in Lattice Attacks on Ring-LWE Problem", 2023 IEEE 47TH ANNUAL COMPUTERS, SOFTWARE, AND APPLICATIONS CONFERENCE (COMPSAC), IEEE, 26 June 2023 (2023-06-26), pages 1441-1446, XP034390152, DOI: 10.1109/COMPSAC57700.2023.00221 * Sections III, IV * | 1-12 | |

**TECHNICAL FIELDS SEARCHED (IPC)**

H04L

The present search report has been drawn up for all claims

| Place of search | Date of completion of the search | Examiner |
|---|---|---|
| Munich | 5 February 2025 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23383000
- US 37473223

**Non-patent literature cited in the description**

- **ANTONIO IGNACIO VERA**. *A Note on Integer Factorization Using Lattices*, 27 March 2010, 12
- **BAO YAN et al.** Factoring integers with sublinear resources on a superconducting quantum processor. *arXiv:2212.12372*, 23 December 2022
- **JIN-GUO LIU** ; **LEI WANG** ; **PAN ZHANG**. Tropical Tensor Network for Ground States of Spin Glasses. *Phys. Rev. Lett.*, 2021, vol. 126, 090506
- **GUIFRÉ VIDAL**. Efficient Classical Simulation of Slightly Entangled Quantum Computations. *Physical Review Letters*, 26 February 2003, vol. 91 (14), 147902